# EUROPEAN PATENT APPLICATION

(11) **EP 3 968 444 A1**
(43) Date of publication of application: **16.03.2022**
(21) Application number: 21192441.0
(22) Date of filing: 20.08.2021
(51) Int. Cl.: H01M 50/103, H01M 50/119, H01M 10/04

(54) **BATTERY AND BATTERY CASE INCLUDED IN BATTERY, AND BATTERY CASE MEMBER FOR BUILDING BATTERY CASE**

(30) Priority: 09.09.2020 JP 2020151218
(71) Applicant: Prime Planet Energy & Solutions, Inc., Chuo-ku Tokyo 103-0022 (JP)
(72) Inventor: FUNATO, Minehiro, Chuo-ku, Tokyo, 103-0022 (JP); SHIMURA, Yosuke, Chuo-ku, Tokyo, 103-0022 (JP); ASADACHI, Hideki, Chuo-ku, Tokyo, 103-0022 (JP)
(74) Representative: Kuhnen & Wacker Patent- und Rechtsanwaltsbüro PartG mbB

(57) **Abstract**

The present disclosure provides a battery case that is formed by joining two battery case members to each other to improve the mechanical strength at a joined portion of the members. The battery case disclosed herein is a hexahedral box-shaped battery case including two rectangular wide faces, three rectangular side walls that are present between the two wide faces, and an opening part. The battery case is characterized in that the joined portion is included along the circumference (three sides) of the battery case.

## Description

### BACKGROUND OF THE INVENTION

### 1. Field of the Invention

The present disclosure relates to a battery and a battery case included in the battery, and a battery case member for building the battery case. Specifically, the present disclosure relates to a technique accompanying joining.

### 2. Description of the Related Art

Various types of batteries such as secondary batteries, e.g., a lithium ion secondary battery and a nickel-hydrogen battery, have become more and more important as on-board power supplies for vehicles that use electricity as a driving source, or power supplies which, for example, electric products such as personal computers and mobile terminals are equipped with. Particularly, the lithium ion secondary battery, which is a lightweight battery and which provides high energy density, is preferable as a high power supply for driving vehicles such as electric vehicles (EV), plug-in hybrid vehicles (PHV), and hybrid vehicles (HV). It is expected that the demand for the lithium ion secondary battery continues to grow in the future.

One typical mode of such batteries is a so-called sealed battery provided with a so-called box-shaped case such that a battery case that houses an electrode body including a cathode and an anode is formed into a hexahedral structure, and a lid that covers an opening part in the box-shaped case in which the electrode body is housed. Here, such a box-shaped case is generally made of one plate member by press molding such as deep drawing, and this is regarded as preferable because a battery case can be efficiently made of one plate member.

In recent years, a large-sized battery of a high capacity has been demanded as an on-board power supply for vehicle, and as a result the demand for a large-sized battery case has heightened. However, it is difficult to produce a large-sized battery case by press molding as described above, which results in more frequented production of defective products. With such circumstances in view, a method is attempted in which two battery case members are made to face each other to be joined by using laser welding or the like to make a battery case. A typical example of a battery case that is made according to such a method is the cell case disclosed in Japanese Translation of PCT Application No. 2016-530683.

### SUMMARY OF THE INVENTION

In view of joining two battery case members to each other, mechanical strength at a joined portion to be formed after wielding is required. In contrast, in view of an efficient arrangement in a limited space, a thinner battery case is required. That is, a battery case made of a thin plate and having high mechanical strength at a joined portion is required.

Here, when such a thinner battery case is made according to a method as described above, two battery case members that are made of thin plates are made to face each other to be joined by using laser welding or the like. However, according to the research of the inventors of the present disclosure, it has been found that battery case members having low precision (in measurements and smoothness), especially when made of thin plates, tend to have a gap between facing portions during undergoing facing processing, which leads to lack of materials to be molten in welding, and this may cause welding defects such as holes opened in a joined portion.

The present disclosure has been made with such circumstances in view. A major object of the present disclosure is to provide a battery case of high mechanical strength in which welding defects at a welded portion are prevented even when the battery case is constituted of two battery case members made of thin plates as materials (and battery case members constituting the battery case). Another object of the present disclosure is to provide a battery including such a battery case.

To attain such objects, provided are a battery case described below, and a kit for building a battery case which includes two battery case members constituting the battery case. A battery including such a battery case is also provided.

A kit for building a battery case disclosed herein includes two battery case members each having a joining part to be joined to each other. Each of the two battery case members includes: a rectangular wide face; and three side walls that rise respectively from three sides of the wide face so as to surround the wide face. End parts of the three side walls constitute the joining parts respectively and are formed to be joined to joining parts of opposite end parts of side walls of the other one of the battery case members, which is a joining target. Here, each of the joining parts has a body portion having a cross-sectional area same as that of a portion of the side wall, with the portion continuing to the joining part, and a thickened portion that is a portion adjacent to the body portion and that is for increasing a cross-sectional area of a joined portion where the joining parts are joined to each other.

The kit for building a battery case, which has the foregoing structure, can prevent lack of materials to be molten in welding beforehand even if a gap is created when the two battery case members of thin plates as materials are made to face each other because the joining parts have thickened portions. This can prevent welding defects such as holes opening in the joined portion.

In one preferred mode of the kit for building a battery case disclosed herein, the thickened portion protrudes toward an outside of the battery case member.

The battery case members including the thickened portions of the foregoing structure can prevent a welded portion from unnecessarily interfering in an electrode body beforehand even if the electrode body is housed in the battery case constituted of the battery case members.

In one preferred mode of the kit for building a battery case disclosed herein, a cross-sectional area of the thickened portion of at least one of the two battery case members is at least 25% of a cross-sectional area of the body portion.

The thickened portions of the foregoing structure can prevent welding defects as described above more effectively.

A battery case disclosed herein is a hexahedral box-shaped battery case including: two rectangular wide faces; three rectangular side walls that are present between the two wide faces; and an opening part. The battery case is configured by joining any battery case members disclosed herein.

According to the foregoing structure, a battery case having improved mechanical strength at the joined portion of the side walls can be provided.

In one preferred mode of the battery case disclosed herein, an outside portion of the joined portion of the battery case protrudes more than a surface of the battery case around the outside portion, and an inside portion of the joined portion of the battery case is depressed more than a surface of the battery case around the inside portion.

The battery case of the foregoing structure can prevent the joined portion from unnecessarily interfering in an electrode body beforehand even if the electrode body is housed in the battery case.

As one aspect to implement the foregoing objects, a battery including the battery case of any mode disclosed herein is provided. The battery disclosed herein includes: an electrode body in which a plurality of cathodes and anodes are layered, with a separator interposed therebetween; the battery case that houses the electrode body; and a lid that covers an opening part for housing the electrode body in the battery case.

### BRIEF DESCRIPTION OF THE DRAWINGS

FIG. 1 is a perspective view schematically showing structure of a lithium ion secondary battery according to one embodiment;
FIG. 2 is a front cross-sectional view schematically showing an external shape and an internal structure of the lithium ion secondary battery according to the one embodiment;
FIG. 3 is a perspective view schematically showing structure of a wound electrode body according to the one embodiment;
FIG. 4 is a cross-sectional view taken along the line IV-IV in FIG. 1;
FIG. 5 is a perspective view schematically showing structure of a kit for building a battery case according to the one embodiment;
FIG. 6 is a cross-sectional view taken along the line VI-VI in FIG. 5;
FIG. 7 is a perspective view schematically showing a mode of a coining step according to one embodiment; and
FIG. 8 is a cross-sectional view schematically showing a mode of a coining step according to one embodiment.

### DESCRIPTION OF THE PREFERRED EMBODIMENTS

Preferred embodiments relating to a battery case and a kit for building a battery case which includes two battery case members to constitute the battery case, and a battery including the battery case, which are disclosed herein, will be hereinafter described in detail with reference to the drawings properly. Matters that are necessary for enabling the technique disclosed herein and that are other than those specifically mentioned in the present description, such as a cathode, an anode, a separator, and a method for producing a nonaqueous electrolyte solution/constituents of a nonaqueous electrolyte solution/a method for building a battery may be grasped as design matters by the person skilled in the art based on conventional arts in this field. The technique disclosed herein is enabled based on the contents disclosed in the present description, and the technical common sense in this field.

The following embodiments are not intended to limit the technique disclosed herein. In the drawings indicated in the present description, members and portions that work the same are explained as the same signs are appended thereto. The proportions of measures including length, width, thickness, etc. in each figure do not reflect the actual proportions.

In the present description, "battery" means an electricity storage device through which a predetermined electrical energy can be taken, and is not limited to a specific electricity storage mechanism, that is, constituents of an electrode body and an electrolyte. Examples of such a battery include storage batteries such as a lithium ion secondary battery and a nickel-hydrogen battery, and batteries encompassing storage battery devices such as an electric double layer capacitor. Examples thereof also include all-solid-state batteries using a solid electrolyte. The following embodiments will be described in detail using a lithium ion secondary battery provided with a wound electrode body as an example. It is not intended that the present disclosure is limited to such embodiments. The technique disclosed herein is also applicable to other kinds of batteries such as a nickel-hydrogen battery. The technique disclosed herein is also applicable to a layered electrode body having a layered structure such that a plurality of cathode sheets and anode sheets are alternately layered to each other across a separator.

Hereinafter the battery, the battery case and the battery case members (kit for building a battery case) disclosed herein will be described in order.

### Entire Structure of Lithium Ion Secondary Battery

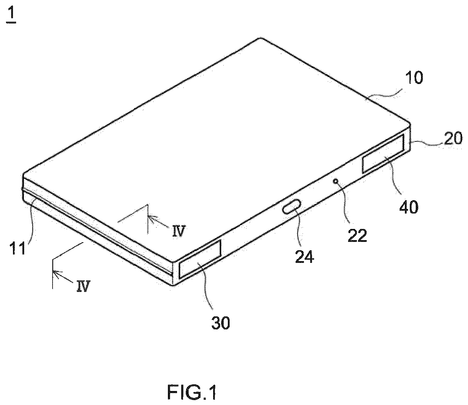

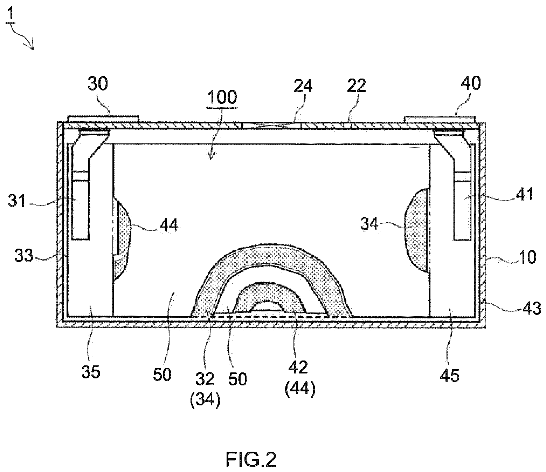

As shown in FIGS. 1 and 2, a lithium ion secondary battery 1 according to the present embodiment is generally provided with an electrode body 100 that is typically a flat electrode body 100, a box-shaped battery case 10 that houses the electrode body and a nonaqueous electrolyte solution that is not shown, and a lid 20 that covers an opening part for housing the electrode body. As the material of the battery case 10 and the lid 20, for example, a lightweight metallic material of high thermal conductivity such as aluminum, aluminum alloys, stainless steel and nickel-plated steel may be preferably used. The lid 20 is provided with a cathode terminal 30 and an anode terminal 40 that are for external connection. The lid 20 is also provided with a relief valve 24 that is set so as to release the internal pressure of the lithium ion secondary battery 1 when the internal pressure rises to a predetermined level or higher, and a solution inlet 22 for pouring the nonaqueous electrolyte solution into the battery case 10.

Welding the lid 20 to the periphery of the opening part of the battery case 10 can join (hermetically seal) the border between the battery case and the lid.

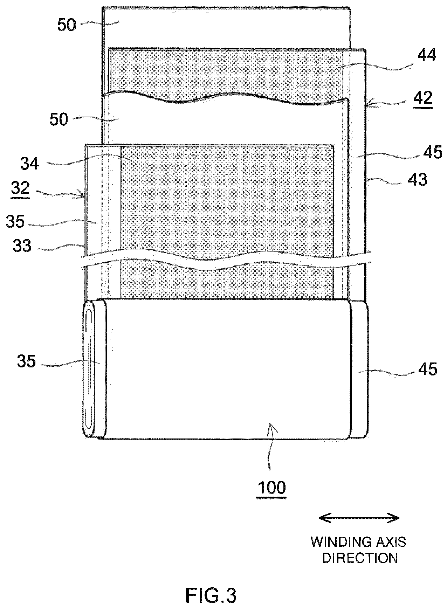

As shown in FIGS. 2 and 3, the electrode body 100 according to the present embodiment is a wound electrode body 100 such that a long cathode sheet (cathode) 32, a long anode sheet (anode) 42 and a long separator 50 are layered and wound in the longitudinal direction.

Specifically, the wound electrode body 100 according to the present embodiment is an electrode body that is formed by layering the cathode sheet 32 such that a cathode active material layer 34 is formed on one or both face(s) (both faces in this case) of a long cathode current collector 33 in the longitudinal direction, and the anode sheet 42 such that an anode active material layer 44 is formed on one or both face(s) (both faces in this case) of a long anode current collector 43 in the longitudinal direction across the long separator (separator sheet) 50, and winding them in the longitudinal direction into a flat shape. Any material that can be used in conventionally known lithium ion secondary batteries may be used as the material constituting the cathode and anode current collectors, the separator, the cathode and anode active material layers, etc. without particular limitations. The technique disclosed herein is not characterized by the foregoing materials, and thus further detailed description thereof is omitted.

A winding core portion such that the cathode active material layer 34, the anode active material layer 44 and the separator 50 are densely layered is formed at the center portion of the wound electrode body 100 in the winding axis direction. A cathode current collector plate 31 and an anode current collector plate 41 are joined to a cathode active material layer non-forming portion 35 and an anode active material layer non-forming portion 45 respectively that stick out of both ends of the wound electrode body 100 in the winding axis direction respectively, to form a current collecting structure of the battery. Such a structure is the same as a lithium ion secondary battery provided with a conventionally known winding electrode body, and further detailed description thereof is omitted.

Hereinafter the battery case 10 according to the present embodiment and a battery case member 14 to build the battery case (a kit for constituting a battery case 12) will be described in detail.

### Battery Case

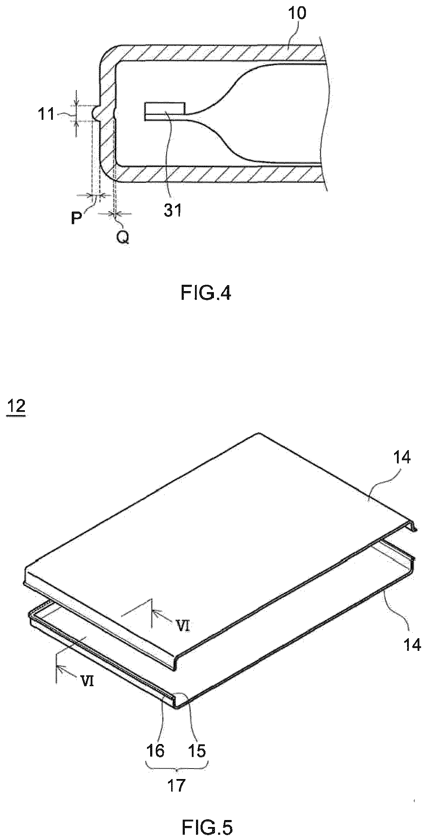

The battery case 10 according to the present embodiment is built by joining the two battery case members 14. First, the external appearance of the battery case 10 will be described in reference to FIGS. 1 and 4.

As shown in FIG. 1, the battery case 10 is a box-shaped battery case including two rectangular wide faces, three rectangular side walls present between the two wide faces, and the opening part. As shown in FIG. 1, the battery case 10 has a joined portion 11 along the circumference (three sides) thereof. Here, as shown in FIG. 4, as to the battery case 10 according to the present embodiment, an outside portion P of the battery case 10 that is along the joined portion 11 protrudes more than a surface of the battery case that is around the outside portion, and an inside portion Q of the battery case that is along the joined portion is depressed more than a surface of the battery case that is around the inside portion. FIG. 4 is a cross-sectional view taken along the line IV-IV in FIG. 1. The cross section of the joined portion 11 in the other part of the circumference (two sides) of the battery case 10 is in the same mode as the foregoing.

### Structure of Battery Case Member

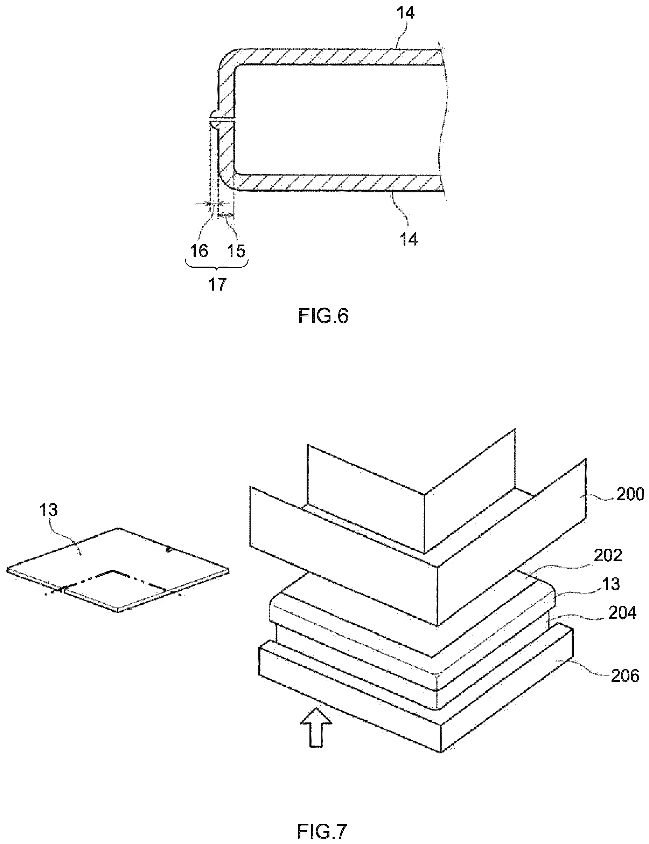

Next, the structure of the battery case member 14 constituting the battery case 10 according to the present embodiment will be described with reference to FIGS. 5 and 6.

First, as shown in FIG. 5, the battery case member 14 according to the present embodiment has a joining part 17 to be joined to another battery case member 14 that is symmetrical thereto, each other. The battery case member 14 has a rectangular wide face, and three side walls that rise from three sides of the wide face respectively so as to surround the wide face. Respective end parts of the three side walls constitute the joining part 17. The end parts are formed so as to be joined to a joining part 17 of opposite side walls of the other battery case member 14, which is to be joined, respectively, each other. Here, as shown in FIGS. 5 and 6, the joining part 17 has a body portion 15 having the same cross-sectional area as a side wall portion continuing to the joining part, and a thickened portion 16 that is a portion adjacent to the body portion and is for increasing the cross-sectional area of the joined portion 11, where the joining parts are joined to each other (See FIGS. 1 and 4).

The size of the cross-sectional area of the thickened portion 16 is not particularly limited as long as the effect of the technique disclosed herein is given. In view of effectively preventing welding defects, the cross-sectional area of the thickened portion 16 of at least one of the two battery case members 14 to constitute the battery case 10 is preferably at least 10% of the cross-sectional area of the body portion 15 and more preferably at least 15% thereof, may be at least 20% thereof and can be particularly preferably at least 25% thereof. The upper limit of the size of the cross-sectional area of the thickened portion 16 is not particularly set. In view of easy joining by laser welding etc., the cross-sectional area of the thickened portion 16 can be preferably at most 80% of the cross-sectional area of the body portion 15, more preferably at most 70% thereof, and particularly preferably at most 60% thereof.

### Method for Making Battery Case Member

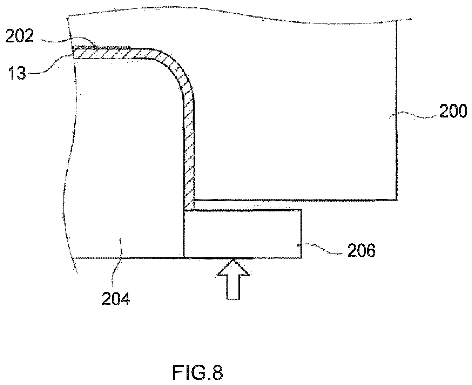

Next, a method for making the battery case member 14 according to the present embodiment will be described with reference to FIGS. 7 and 8 properly.

The battery case member 14 or the kit for building a battery case 12 according to the present embodiment may be made based on a conventionally known pressing step. Specifically, for example, drilling and chamfering, raising, trimming of the external shape, bending, etc. are carried out on one metal plate that is formed from a lightweight metallic material of high thermal conductivity such as aluminum, aluminum alloys, stainless steel and nickel-plated steel, so that a processed plate 13 shown in FIG. 7 is obtained. Coining is carried out on the processed plate 13, and thereafter two-shot separation is carried out thereon, which makes it possible to obtain the two battery case members 14, that is, the kit for building a battery case 12.

Here, FIG. 7 is a perspective view schematically showing a mode of a coining step according to one embodiment. As shown in FIG. 7, in such a coining step, an upper die 200 and a lower die 204, and the processed plate 13 held by a pad 202 are compressed by a coining punch 206 in the direction indicated by the white arrow, which can result in formation of the body portion 15 in the battery case member 14, and the thickened portion 16 adjacent to the body portion. The size of the cross-sectional area of the thickened portion 16 can be adjusted by, for example, appropriately changing the compression pressure of the coining punch 206.

FIG. 8 is a cross-sectional view schematically showing a mode of a coining step according to one embodiment. As shown in FIG. 8, in such a coining step, the thickened portion 16 is formed towards the outside of the battery case member 14 when the processed plate 13 is compressed by the coining punch 206 in the direction indicated by the white arrow because the inner diameter side of the processed plate 13 is held by the lower die 204.

### Method for Making Battery Case

Next, a method for making the battery case 10 according to the present embodiment will be described.

First, the joining part 17 of the battery case member 14 is made to face the opposite joining part 17 of the other battery case member 14, which is symmetrical thereto and is to be joined, each other. Next, facing portions are joined by laser welding or the like, which makes it possible to obtain the battery case 10. See FIG. 1. In the battery case members 14, lack of materials to be molten in the welding can be prevented beforehand even if a gap is generated when the battery case members 14 are made to face each other, because the joining parts 17 have the thickened portions 16. This makes it possible to provide the battery case 10 of high mechanical strength such that welding defects such as holes opening in the joined portion 11 (see FIG. 1) are prevented.

In the present embodiment, the battery case 10 is constituted of the two same battery case members 14. The present disclosure is not limited to this. For example, two kinds of battery case members different in height of the side walls etc. may be used. Two kinds of battery case members that are different in size of the cross-sectional area of the thickened portion 16 may be also used. For example, the battery case member 14 such that the size of the cross-sectional area of the thickened portion 16 is 20% of the cross-sectional area of the body portion 15, and the battery case member 14 such that the size of the cross-sectional area of the thickened portion 16 is 30% of the size of the cross-sectional area of the body portion 15 may be used.

Hereinafter Example relating to the present disclosure will be described. It is not intended that the description limits the technique disclosed herein to that shown in such Examples.

### 1. Making Each Sample

In this Example, prepared were a sample 1 including two battery case members such that only the body portions 15 were formed in the battery case members 14 as shown in FIG. 5, and a sample 2 including two battery case members each including the body portion 15 and the thickened portion 16 as the battery case members 14. Hereinafter each sample will be described.

### i. Making Sample 1

An aluminum plate (material of A13004-O; 65 mm long, 120 mm broad and 0.4 mm thick) was prepared. Raising, bending and coining were carried out on such a plate. Such coining was carried out by a servo press (200T press AIDA manufactured by AIDA ENGINEERING, LTD.) to form the body portion only. Two-shot separation was carried out on the member after the coining, so that the (two) battery case members according to the sample 1 were obtained.

### ii. Making Sample 2

The (two) battery case members according to the sample 2 were made in the same manner as the sample 1 except that in the coining step, the compression pressure by a coining punch was adjusted to form the body portion and the thickened portion adjacent to the body portion. Such a thickened portion was formed such that the thickness of the joining part was increased from 0.4 mm to 0.5 mm, that is, such that the size of the cross-sectional area of the thickened portion was 25% of the cross-sectional area of the body portion.

### 2. Evaluation of Samples

For each of the foregoing made samples, the two battery case members were made to face each other, and the size of a gap in the facing was fluctuated, to evaluate whether or not welding defects occurred in welding. Such welding was performed by a fiber laser. The welding conditions were such as welding velocity: 180 mm/sec, spot diameter: 0.3 m and power: 1.4 KW. After such welding, whether any hole opened in the joined portion or not was confirmed by the presence or absence of the penetration of a Color check. Specifically, a penetrant solution was applied onto a joining face, and it was confirmed from the opposite side of the joining face whether the penetrant solution penetrated. The evaluation results are shown in appropriate boxes of Table 1.
"○": no holes confirmed in the joined portion, that is, no penetration of the penetrant solution confirmed.
"×": any hole confirmed in the joined portion, that is, the penetration of the penetrant solution confirmed.

### [Table 1]

**Table 1**

| Size of gap in facing (mm) | Sample 1 (having no thickened portion) | Sample 2 (having thickened portions) |
|---|---|---|
| 0 | ○ | ○ |
| 0.05 | × | ○ |
| 0.10 | × | ○ |

As shown in Table 1, when there was no gap in the facing, that is, the size of the gap in the facing was 0 mm, no welding defects were confirmed in both the samples 1 and 2. In contrast, when there was a gap in the facing, specifically, the size of the gap in the facing was 0.05 mm or 0.10 mm, welding defects were confirmed in the sample 1, where no thickened portion was formed, but no welding defects were confirmed in the sample 2, where the thickened portions were formed. As described above, according to the technique disclosed herein, a battery case of high mechanical strength such that welding defects at a joined portion are prevented (and battery including the battery case) can be provided even when the battery case is constituted of two battery case members of thin plates as materials.

The present disclosure has been described in detail as the foregoing. The foregoing description is just an example. That is, the technique disclosed herein encompasses many variations and modifications of the foregoing specific example.

## Claims

1. A kit for building a battery case (12) including two battery case members (1 **4**) each having a joining part (17) to be joined to each other,
each of the two battery case members (1 4) comprising:
a rectangular wide face; and
three side walls that rise respectively from three sides of the wide face so as to surround the wide face, wherein
end parts of the three side walls constitute the joining parts (17) respectively and are formed be joined to joining parts (17) of opposite end parts of side walls of the other one of the battery case members (14), which is a joining target, wherein
each of the joining parts (17) has
a body portion (15) having a cross-sectional area same as that of a portion of the side wall, with the portion continuing to the joining part (17), and
a thickened portion (1 6) that is a portion adjacent to the body portion (15) and that is for increasing a cross-sectional area of a joined portion (11) where the joining parts (17) are joined to each other.

2. The kit for building a battery case (12) according to claim 1, wherein
the thickened portion (16) protrudes toward an outside of the battery case member (14).

3. The kit for building a battery case (12) according to claim 1 or 2, wherein
a cross-sectional area of the thickened portion (16) of at least one of the two battery case members (1 4) is at least 25% of a cross-sectional area of the body portion (1 5) .

4. A hexahedral box-shaped battery case (1 0) comprising:
two rectangular wide faces;
three rectangular side walls that are present between the two wide faces; and
an opening part, wherein
the battery case (1 0) is configured by joining the two battery case members (1 4) according to any one of claims 1 to 3 to each other.

5. The battery case (1 0) according to claim 4, wherein
an outside portion of the joined portion (11) of the battery case (10) protrudes more than a surface of the battery case (10) around the outside portion, and
an inside portion of the joined portion (11) of the battery case (10) is depressed more than a surface of the battery case (1 0) around the inside portion.

6. A battery (1) comprising:
an electrode body (1 0 0) in which a plurality of cathodes (32) and anodes (4 2) are layered, with a separator (5 0) interposed therebetween;
a battery case (10) that houses the electrode body (100) ; and
a lid (20) that covers an opening part for housing the electrode body (100) in the battery case (10) , wherein
the battery case (10) is the battery case (10) according to claim 4 or 5.
